# EUROPEAN PATENT SPECIFICATION

(11) **EP 3 591 848 B1**
(45) Date of publication and mention of the grant of the patent: **27.09.2023**
(21) Application number: 19193352.2
(22) Date of filing: 24.07.2013
(51) Int. Cl.: H04B 1/20

(54) **SIGNAL RECEIVER IN A RF DISTRIBUTION SYSTEM**
SIGNALEMPFÄNGER IN EINEM HF-VERTEILSYSTEM
RECEPTEUR DE SIGNAL DANS UN SYSTÈME DE DISTRIBUTION RF

(30) Priority: 21.09.2012 US 201213623950
(43) Date of publication of application: 08.01.2020
(62) Divisional of application: 13748151.1
(73) Proprietor: Shure Acquisition Holdings, Inc., Niles, IL 60714 (US)
(72) Inventor: MARCO, Todd P., Chicago, IL 60647 (US); BRUMM, Scott N., Chicago, IL 60618 (US); GRAD, Steven M., Northbrook, IL 60062 (US); KENKEL, Mark Allen, Schaumburg, IL 60193 (US); SINGH, Irwin Preet, Prospect Heights, IL 60070 (US)
(74) Representative: Dehns

(56) References cited:
- US-A- 5 719 860
- US-A1- 2008 219 477
- US-A1- 2011 021 135
- US-A1- 2011 080 847
- US-A1- 2012 134 279

## Description

### BACKGROUND

Wireless microphone receivers are often connected to a coaxial antenna distribution system. The receivers are typically connected to a distribution amplifier and may be connected to one another in a cascaded fashion though a series of coaxial cables. The assigned frequency ranges of the receivers may be controlled though networking protocols such as Ethernet. If the distribution amplifier and the associated receivers are configured to different filter bands, the mismatch may cause poor or inoperable system performance. Moreover, the distribution system may not operate properly if the components are not correctly connected.

US 2011/021135 A1 discloses a RF redirection module incorporated into a RF system already having a receive antenna and a first transmit antenna allowing the RF system to be coupled to a second transmit antenna and to provide a transmit signal to the second transmit antenna.

US 5719860 A discloses a wideband band bus in a base station of a wireless communication system which comprises consecutively interconnected slots and is configured into one or more sections that perform application specific cell processing operations, without requiring hardware or software changes to the base station. A section of the wideband bus includes a group of the consecutively connected slots containing digital signal processing modules which implement a cell processing application.

US 2008/219477 A1 discloses an audio system comprising an audio device having a connection port and an external device, the external device connected to the connection port of the audio device. The audio system further comprises a plurality of connection setting templates previously prepared, which contain target port connection information specifying target destination ports to which the ports of the audio device and the external device that constitute the audio system should be connected. The system is configured to use the connection templates to check connectivity of the devices in the system.

US 2012/134279 A1 discloses a base station apparatus configured to collect the terminal throughput of an uplink and downlink communication, the number of simultaneous communication terminals, and the information on a radio propagation channel from a distributed antenna to a terminal antenna, estimate the throughput in each communication mode from the number of simultaneous communication terminals and the radio propagation channel information, select a communication mode by comparing the estimated throughput with a request value, connect the distributed antenna and the base station apparatus in an antenna connection pattern in the selected communication mode, and switch the communication mode between the base station device and the terminal to continue the communication.

US 2011/080847 A1 discloses configurations for an RF distribution system, wherein a first RF component modulates a signal on a first port, if a second RF component detects a modulated signal on a second port then a processor deems that the two RF components are connected together, and, when the configuration has been determined by the processor, the RF distribution system may further verify whether the configuration is consistent.

### SUMMARY

This summary is provided to introduce a selection of concepts in a simplified form that are further described below in the Detailed Description. This Summary is not *intended to identify key features or essential features of the disclosure.

According to an aspect of the disclosure, the invention provides a receiver for receiving a radio frequency (RF) signal in a distribution system, the receiver comprising: an A-port providing radio frequency (RF) connectivity to a first antenna via the distribution system; a B-port providing RF connectivity to a second antenna via the distribution system; and a processor configured to perform: receiving received data from the distribution system via the B-port; processing the received data to obtain processed data; and sending the processed data to the distribution system via the A-port. The receiver is characterised in that: the receiver further comprises an RF scanner (1510), and in that the processor is further configured to perform: obtaining an indication to perform a scan by the RF scanner; initiating (1701), based on the indication, the scan by the RF scanner; obtaining scan results from the RF scanner; including the scan results in the processed data; and passing (1705) the processed data to a next receiver via the distribution system through the A-port. Different commands for locking, unlocking, scanning RF spectrum, and configuring can be sent between the receivers via the A-ports and B-ports through the RF distribution system.

### BRIEF DESCRIPTION OF THE DRAWINGS

A more complete understanding of the exemplary embodiments of the present invention and the advantages thereof may be acquired by referring to the following description in consideration of the accompanying drawings, in which like reference numbers indicate like features and wherein:
Figure 1 shows an apparatus for supporting a wireless system.
Figure 2 shows a block diagram of a receiver.
Figure 3 shows a flow diagram for performing a self-discovery of an RF configuration for a wireless system.
Figure 4 shows an RF configuration for an RF distribution system.
Figure 5 shows an RF configuration for a wireless system.
Figure 6 shows a block diagram of a distribution amplifier that is connected to wireless receivers.
Figure 7 shows back panels of a distribution amplifier unit and receiver unit.
Figure 8 shows a wireless communication system for use with a receiver according to an embodiment of the invention.
Figure 9 shows a block diagram for routing between ports based on sensing configured receivers for use with a receiver according to an embodiment of the invention.
Figure 10 shows an exemplary routing configuration of a wireless communication system for use with a receiver according to an embodiment of the invention.
Figure 11 shows an exemplary re-routing of a routing configuration for a wireless communication system for use with a receiver according to an embodiment of the invention.
Figure 12 shows a mapping of network paths to sensed receiver configurations for a wireless communication system for use with a receiver according to an embodiment of the invention.
Figure 13 shows an example of extending a wireless communication system for use with a receiver according to an embodiment of the invention.
Figure 14 shows an example of extending a wireless communication system for use with a receiver according to an embodiment of the invention.
Figure 15 shows a wireless communication system for use with a receiver according to an embodiment of the invention.
Figure 16 shows a flow chart for locking a receiver in a wireless communication system in accordance with an aspect of the embodiments.
Figure 17 shows a flow chart for a scanning process in a wireless communication system for use with a receiver according to an embodiment of the invention.
Figure 18 shows a flow chart for sending data among receivers in a wireless communication system in accordance with an aspect of the embodiments.
Figure 19 shows an example for scanning an RF spectrum with a back link to a portable device in a wireless communication system.
Figure 20 shows a block diagram of a wireless communication system in which some of the receivers are cascaded for use with a receiver according to an embodiment of the invention.
Figure 21 shows an example of routing data between receivers through a cascaded configuration for use with a receiver according to an embodiment of the invention.
Figure 22 shows an example of modulating the direct current (DC) level on output power connectors for networking functionality.
Figure 23 shows an example of networking a system of transmitters through an antenna combiner for use with a receiver according to an embodiment of the invention.
Figures 24-25 show RF communication systems for use with a receiver according to an embodiment of the invention.

### DETAILED DESCRIPTION

In the following description of the various exemplary embodiments, reference is made to the accompanying drawings which form a part hereof, and in which is shown by way of illustration various embodiments in which the invention may be practiced.

Aspects of the disclosure relate to determining the configuration of a radio frequency (RF) distribution system (*e.g*., wireless microphone receivers, scanner, antenna distribution system, or any system containing some or all of the components described herein) and to verify the consistency of the determined configuration. A first RF component in the distribution system modulates a signal on a first port. If a second RF component detects a modulated signal on a second port, then a processor deems that the two RF components are connected together. When the configuration has been determined by the processor, the process may further verify whether the configuration is consistent (*e.g.*, whether connected components operate on the same band and whether all components are connected to at least another component.

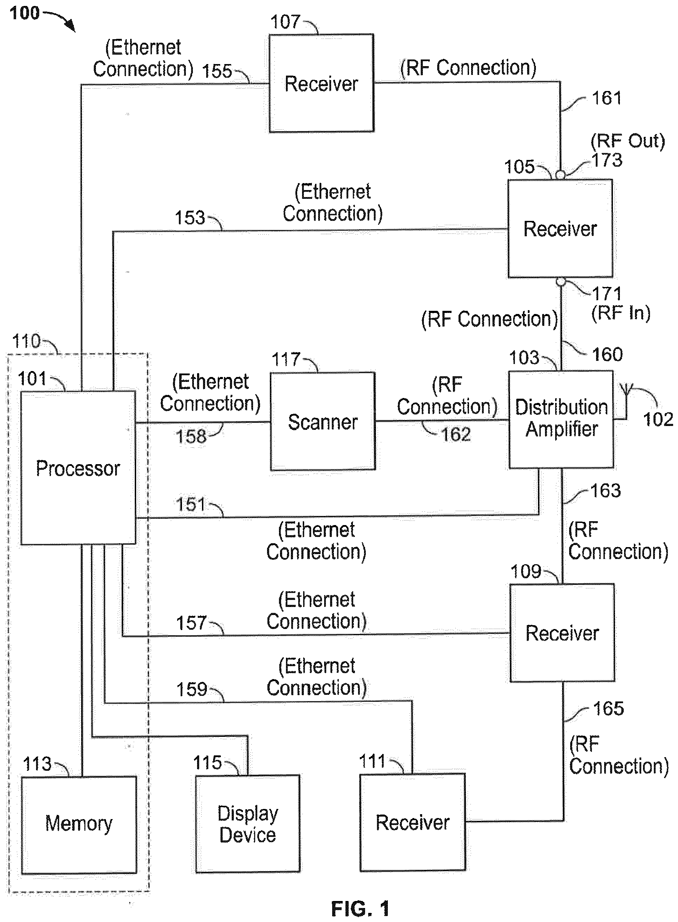

Figure 1 shows apparatus for supporting a wireless system. Microphone receivers 105, 107, 109, and 111 are connected in a coaxial antenna distribution system to antenna 102 through distribution amplifier 103. Receivers 105, 107, 109, and 111 and distribution amplifier 103 may be controlled though networking protocols, *e.g.*, Ethernet, by processor 101 through Ethernet connections 153, 155, 157, 159, and 151, respectively. While Figure 1 shows separate Ethernet connections, Ethernet connectivity is often supported through a daisy chain configuration, in which Ethernet connection is obtained through chaining devices and assigning unique addresses to each device.

If distribution amplifier 103 and associated receivers 105, 107, 109, and 111 are configured to different frequency ranges or bands (which may be referred to as "bands"), a mismatch may cause poor or inoperable system performance. A voltage source may be presented at the antenna ports of receivers 105, 107, 109, and 111 (*e.g*., input RF port 171 of receiver 105) and distribution amplifier 103 for use in driving line amplifiers and powered antennas. A DC voltage may be used to modulate (*e.g*., ON/OFF or multiple voltage levels) with a given network system command issued by processor 101 to a specific receiver through the Ethernet connection. The DC voltage is modulated by changing the DC component of a signal between an operational voltage level (*e.g.*, 12 volts) and an intermediate voltage level (*e.g*., 10.5 volts or 13.5 volts). The modulated DC voltage may be detected by upstream receivers (*e.g*., at output RF port 173 if receiver 107 is modulating a signal at its input RF port), and a message may be sent over the Ethernet network by the detecting receiver that informs system processor 101 that an RF link (*e.g.*, RF connection 160, 161, 162, 163 or 165) between these RF components has been determined (discovered). If RF components are tuned to different bands and connected together, the RF distribution system 100 may inform the user of the mismatch through system software that may display an indication on display device 115.

Other example systems may modulate the signal at input RF port 171 in a different fashion. For example, a signal may be modulated with one or more tones or a serial/duplex data stream.

Some example systems may send information on the signal at port 171 utilizing a simplex/duplex digital data stream (*e.g*., with a UART), a low speed simplex data stream, or a single pulse identifier (*e.g*., no formatted data with only a single identifier bit).

With the example shown in Figure 1, a receiver (*e.g*., receiver 105) modulates a signal on its input RF port (*e.g*., port 171) so that a preceding (upstream) RF component (receiver or distribution amplifier, *e.g*., amplifier 103) detects the modulated signal when the components are connected together through an RF link. However, with other embodiments, an RF component may modulate its output RF port (*e.g.*, port 173) so that the successive (downstream) RF component (*e.g*., receiver 107) may detect the modulated signal at its input RF port.

RF distribution system 100 may also automatically configure receivers 105, 107, 109, and 111 for assigning operating frequencies within the same band. The configuration procedure may be performed after scanning the band or bands by scanner 117 and determining the set of frequencies that provide the best RF compatibility. Scanner 117 accesses the RF spectrum from distribution amplifier 103 through RF link 162 and provides information about the spectrum to processor 101 through Ethernet connection 158. Receivers that are cascaded together (*e.g*., receivers 105 and 107) may then be configured to the same band and programmed to individual channels within that band. System setup may appear to the user as a single operation that determines the system configuration, scans for clear frequencies, calculates compatible frequencies within frequency bands, and configures receivers to the calculated frequencies (channels).

RF distribution system 100 may determine the RF configuration at system initialization, when an RF component is added to system 100, or during operation of system 100. System 100 may be configured in response to an input from a user, cyclically (*e.g.*, once per predetermined time interval), or automatically (e.g., when the system is initialized or when an RF component is added to RF distribution system 100).

Processor 101 may instruct an RF component to modulate a signal at its input RF port by sending a message to the RF component over the Ethernet network. Consequently, the RF component that is connected to the instructed RF component should send a message to processor 101 over the Ethernet network, informing processor 101 that the modulated signal was detected.

Processor 101 may execute computer executable instructions from a computer-readable medium, e.g., memory 113, in order perform a discovery process (any or all of the processes described herein). An apparatus 110 may comprise processor 101 and memory 113. Apparatus 110 may include one or more application-specific integrated circuits (ASICs), complex programmable logic devices (CPLDs), field-programmable gate arrays (FPGAs), or other integrated circuits. Computer storage media may include volatile and nonvolatile, removable and non-removable media implemented in any method or technology for storage of information such as computer readable instructions, data structures, program modules or other data. Computer storage media include, but may not be limited to, random access memory (RAM), read only memory (ROM), electronically erasable programmable read only memory (EEPROM), flash memory or other memory technology, CD-ROM, digital versatile disks (DVD) or other optical disk storage, magnetic cassettes, magnetic tape, magnetic disk storage or other magnetic storage devices, or any other medium that can be used to store the desired information and that can be accessed by processor 101. The executable instructions may carry out any or all of the method steps described herein. Apparatus 110 (*e.g.*, a laptop computer) may be external to the receivers, scanner, and distribution amplifiers as shown in Figure 1. Apparatus 110 may be imbedded into each of the devices (e.g., receivers 105 and 107 and/or distribution amplifier 103) so that an external computer is not necessarily required.

Apparatus 100 or portions of apparatus 100 may be implemented as one or more application-specific integrated circuits (ASICs), complex programmable logic devices (CPLDs), field-programmable gate arrays (FPGAs), or other integrated circuits having instructions for performing operations as described in connection with one or more of any of the embodiments described herein. Said instructions may be software and/or firmware instructions stored in a machine-readable medium and/or may be hard-coded as a series of logic gates and/or state machine circuits in one or more integrated circuits and/or in one or more integrated circuits in combination with other circuit elements.

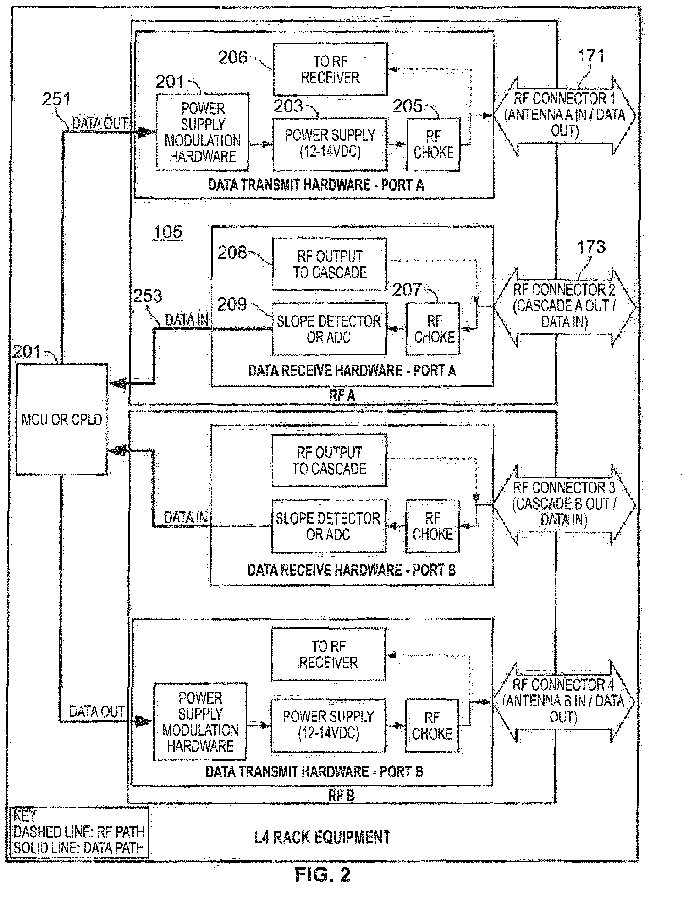

Figure 2 shows a block diagram of receiver 105. When instructed by processor 201 through Ethernet connection 153 (corresponding to message 251), receiver 105 modulates the signal on input RF port 171. In order to modulate the signal, power supply modulation hardware 201 changes the voltage levels of power supply 203. RF choke 205 isolates power supply 203 from the RF signal component that is processed by RF circuitry 206. The upstream receiver (not shown) should detect the modulated signal

Receiver 105 also includes detect circuitry to detect a modulated signal from a downstream receiver (not shown). In order to detect a modulated signal through output RF port 173, detector 209 detects a DC voltage transition in the modulated signal and reports the occurrence to processor 201 through Ethernet connection 153 (corresponding to message 253). RF choke 207 provides RF isolation for detector 209 when RF cascade circuitry 208 provides the RF signal to the downstream receiver. Detector 209 may assume different forms, including a slope detector or an analog-to-digital converter (ADC).

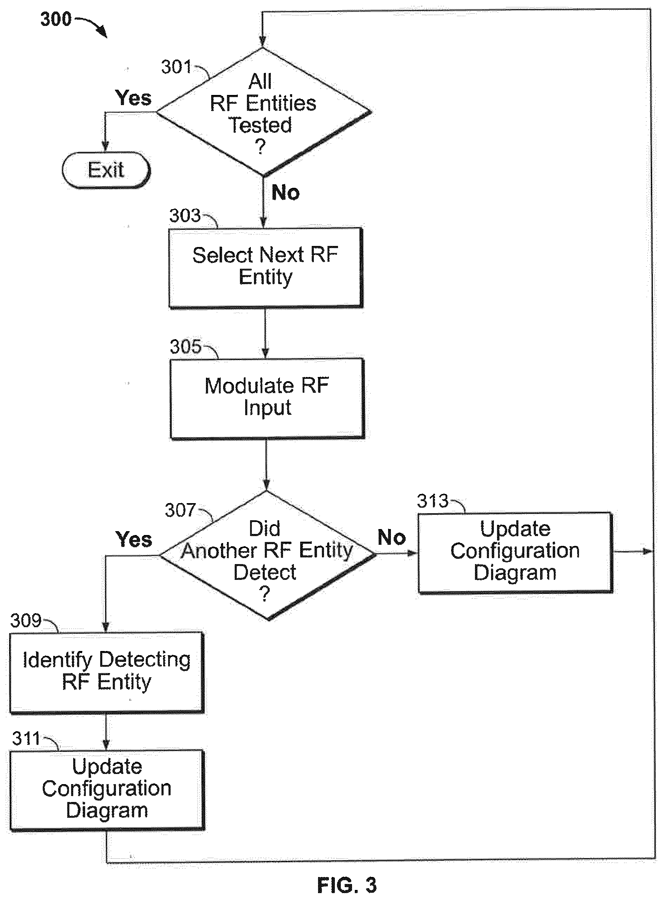

Figure 3 shows flow diagram 300 for performing a self-discovery of an RF configuration for RF distribution system 100. In block 301, process 300 determines whether all of the RF entities (*e.g*., receivers, distribution amplifies, and scanners) have been tested. If not, the next RF entity is determined in block 303. The next RF entity is determined from the assigned media access control (MAC) address. The next RF entity may be selected by different criteria, *e.g*., by selecting the MAC randomly or by selecting the MAC address in a predetermined order. Random selection of the MAC address may be approximated by a pseudo-random process.

As described above, the use of MAC addressing serves as a device identifier. However, other examples may use other forms of device-specific identifiers. For example, some examples may support a different protocol (*e.g*., USB or Zigbee) other than Ethernet.

In block 305, processor 101 instructs the selected RF entity to modulate the signal at its input RF port. In blocks 307, 309, and 311, the upstream RF entity should detect and report the modulated signal except when the instructed RF entity is a distribution amplifier (*e.g*., distribution amplifier 103 as shown in Figure 1) that is connected to an antenna (*e.g.*, antenna 102). Otherwise, a configuration error indication may be generated by processor 101 if none of the RF entities (components) detects the modulated signal.

The results of process 300 may be used in conjunction with further processing in which a diagram of RF distribution system 100 may be displayed on display device 115 (as shown in Figure 1). The diagram may include hardware connections between RF entities and may also indicate whether there is an error in the RF configuration (*e.g*., when two receivers for different bands are connected or when a receiver is not connected to a distribution amplifier or another receiver). The analysis facilitates confirmation of correct system connections and may detect broken RF cables.

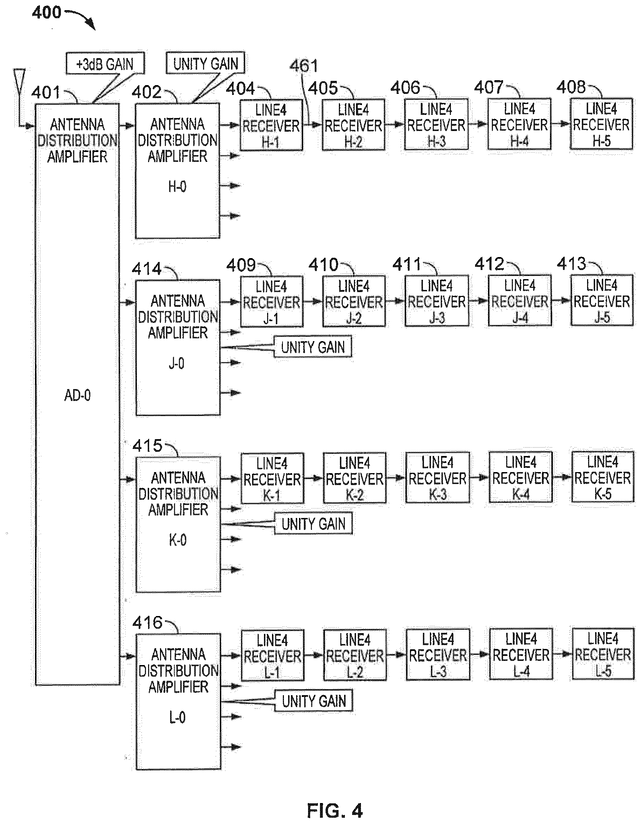

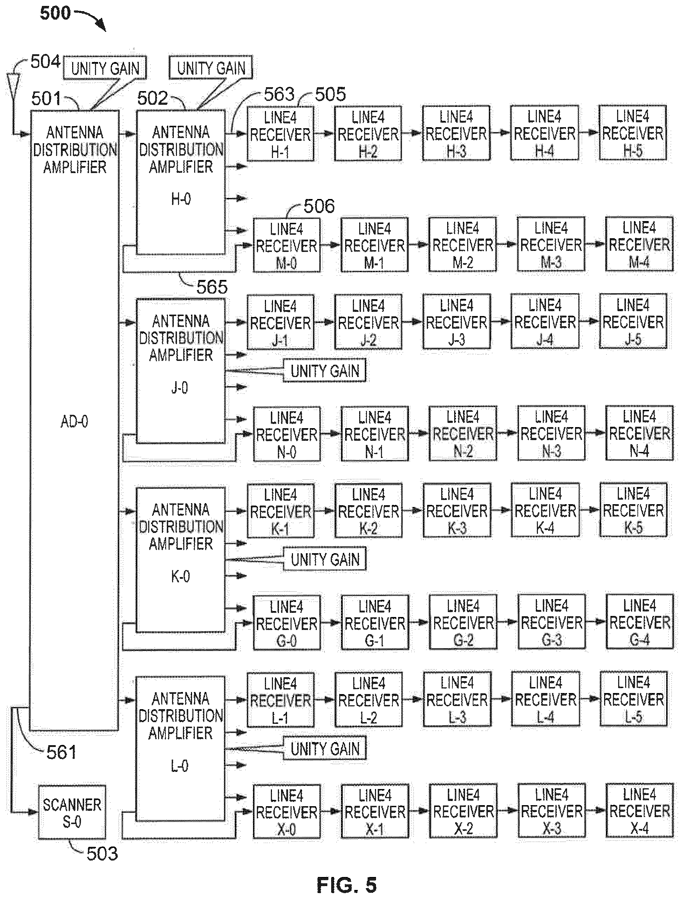

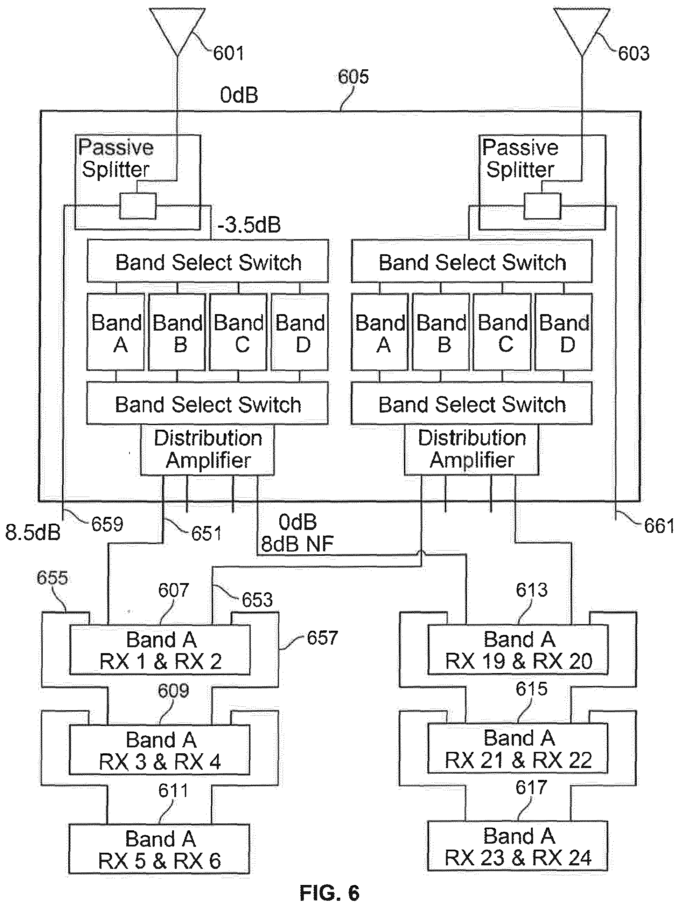

Figure 4 shows RF configuration 400 for a wireless system. Bands H, J, K, and L correspond to 470 to 518 MHz, 518 to 578 MHz, 578 to 638 MHz, and 638 to 698 MHz, respectively. The outputs of a distribution amplifier may be set to one of the 4 bands or to wideband operation, *i.e.,* the output spans the entire range from 470 to 698 MHz. Referring to Figure 6, filter bands A, B, C and D as shown for distribution amplifier 605 correspond to filter bands H, J, K and L as shown in Figure 4. Distribution amplifier 401 is configured to pass the entire filtered band (470-698 MHz). Distribution amplifiers 402, 414, 415, and 416 (H-0, J-0, K-0, and L-0, respectively) are set to sub-bands of 470-698 MHz as described above. Each wireless microphone receiver (*e.g.,* receivers 404-413), antenna distribution amplifier (e.g., amplifiers 401 and 402), and scanner (scanner 503 as shown in Figure 5) has a 12-15 V DC signal component present at the antenna input port. The DC voltage is typically used to drive line amplifiers and power antennas. With some embodiments, RF loop through (cascade) ports may not have a DC voltage source available. The DC voltage at the antenna ports may be toggled off and on (to modulate its operating voltage) during system setup via network command. If receivers are cascaded, the DC voltage from a receiver's antenna port is presented to the loop through port of the preceding receiver. The RF loop through port may sense the presence and modulation of the DC and thus may be indicative of the RF connection chain configuration.

For example, if the DC on the input antenna port of receiver (H-2) 405 is toggled off and on, the modulated signal should be sensed by the loop through port of receiver (H-1) 404 and reported to the network. The reported indication informs processor 101 that receivers share 405 and 404 RF connection 461 and should be set to operate within the same filter band. In a similar manner, each receiver and distribution amplifier in the network has its ports toggled one at a time. If a change in DC level is not sensed by another RF entity, the entity being toggled is assumed to be at the antenna end of the chain (corresponding to distribution amplifier 401). In the case of diversity systems, when a change is sensed only by one antenna port, a broken or missing RF cable may be detected.

A message may be reported via the computer network indicating the configuration of the RF connections and issuing warnings about broken RF cables. Receivers that are chained together should be set to the same frequency band because the RF signals of the receivers have been filtered to that band by the first receiver in the chain. If a distribution amplifier is band-selected, each receiver serviced by that distribution amplifier should be set to frequencies within the selected band. A distribution amplifier (*e.g.,* amplifier 401 as shown in Figure 4) may also be set to wideband operation (simultaneously passing all signals within bands A, B, C, and D as shown with distribution amplifier 605 in Figure 6). Each cascaded distribution amplifier (*e.g.,* amplifier 402) may be separately band selected and support four receiver chains, where each chain is associated with the same frequency band.

The loop-through of an antenna distribution amplifier may also be set to wideband operation in order to support a wideband scanner (not explicitly shown in Figure 4 but as discussed with Figure 5).

Distribution amplifiers (*e.g.,* amplifiers 401 and 402) may be cascaded to increase the number of receivers that can be supported by RF distribution system 100. With some embodiments, the gain of the second distribution amplifier (e.g., amplifier 402) is typically set to unity.

Figure 5 shows RF configuration 500 for a wireless system. Configuration utilizes scanner 503 that scans the frequency spectrum of the input signal from antenna 504 through distribution amplifier 501 and RF connection 561. Distribution amplifier 501 provides both filtered outputs (*e.g.,* corresponding to output 651 as shown in Figure 6) as well as an unfiltered output (*e.g.,* corresponding to output 659). Scanner 503 analyzes the unfiltered output through connection 561 and reports the results to processor 101 (as shown in Figure 1) as previously discussed.

Distribution amplifier 501 is cascaded to distribution amplifier 502, which provides filtered signals (*e.g.,* to receiver 505 through connection 563) and unfiltered signals (*e.g.,* receiver 506 through connection 565).

Figure 6 shows a block diagram of distribution amplifier 605 that is connected to receiver units 607, 609, 611, 613, 615, and 617. Distribution amplifier 605 receives signals through antennas 601 and 603 and provides filtered RF outputs to each receiver in order to support diversity reception. For example receiver unit 607 (comprising receivers 1 and 2) is provided two RF input signals through RF connections 651 and 653. Receivers 1 and 2 may be internally cascaded within receiver unit 607 and set to the same frequency band. Alternatively, receivers 1 and 2 may be externally cascaded through a coaxial cable. Receiver unit 609 is cascaded to receiver unit 607 through RF connections 655 and 657. Receiver unit 611 is further cascaded from receiver unit 609.

As previously discussed, distribution amplifier 605 also provides unfiltered RF signals through connections 659 and 661 in order to support additional receivers or a scanner.

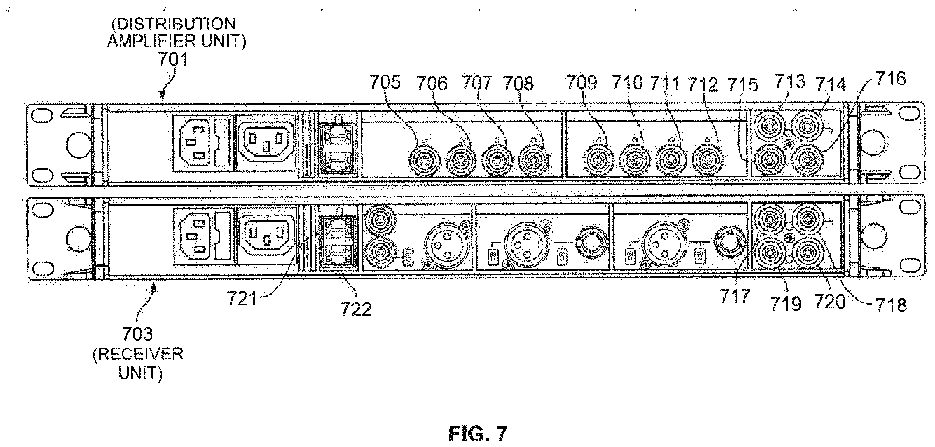

Figure 7 shows back panels 701 and 703 for distribution amplifier unit 605 and receiver unit 607, respectively. While Figure 7 shows only one distribution amplifier unit and one receiver unit, a plurality of distribution amplifier units and receivers may be configured into system 100, in which the units may be stacked in one or more racks. For example, some configurations may support over 100 channels and thus over 50 dual channel receiver units.

Two antennas may be connected to BNC connectors 713 and 714 of back panel 701 in order to provide RF diversity. Both filtered RF outputs (supporting diversity pairs and corresponding to BNC connectors 705 and 709, 706 and 710, 707 and 711, and 708 and 712) and unfiltered RF outputs (corresponding to BNC connectors 715 and 716) may be connected to receiver units through coaxial cables.

Back panel 703 corresponds to two receivers (channels), where Ethernet connectivity is established by daisy chaining through connectors 721 and 722. Diversity input RF signals are provided through BNC connectors 717 and 718 and are cascaded to another receiver unit through BNC connectors 719 and 720.

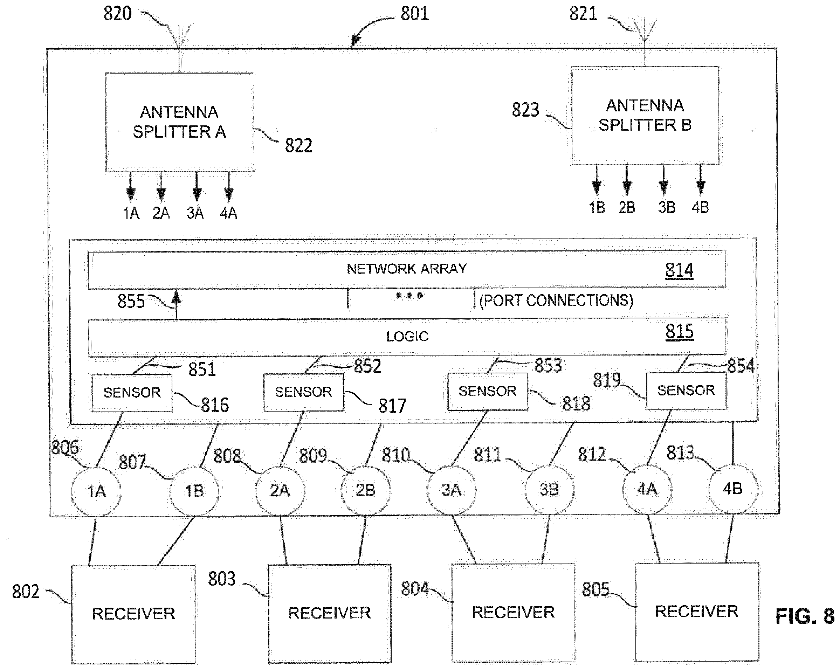

Data may be transported between entities of a communication system over pathways that are also used for other purposes, e.g., the distribution of radio frequency (RF) signals or providing direct current (DC) electrical power. Consequently, the need for separate data connections, e.g., Ethernet connection 153 as shown in Figure 1, may be circumvented. Figures 8-23 show some examples of this approach.

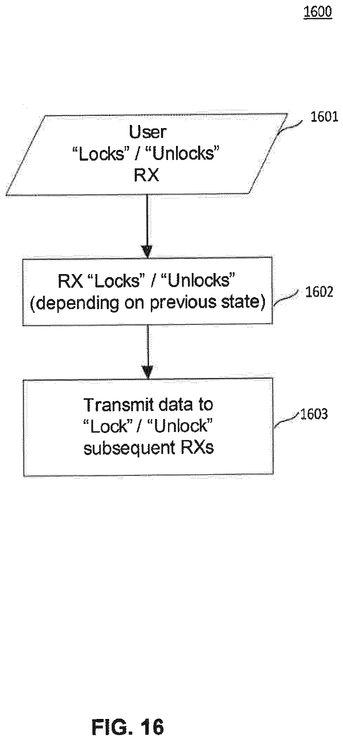

As will be discussed with Figures 16-18, entities of the communication system may send data (e.g., containing messages) to other entities over the pathways in order to configure the communication system. For example, a receiver in an RF distribution system can scan an RF spectrum and send the results to other receivers so that each of the receivers can configure its operating frequency from a set of frequencies for the best RF compatibility.

Figure 8 shows a wireless communication system for use with a receiver according to an embodiment of the invention. The communication system comprises distribution system 801 and receivers 802-805 that may support a plurality of wireless microphones for an entertainment venue. In addition, some examples may support a communication system for wireless telephony, including base stations that interact with wireless portable devices.

For traditional systems, the setup process for the wireless microphones typically requires either a manual procedure or traditional networking protocols (i.e. Ethernet and so forth) according to an aspect of the disclosure, RF connections are utilized in a distribution system 801 to provide networking functionality. A feature-set may include automatic deployment of optimal configuration after conducting a scan of RF spectrum. Other configuration settings may also be deployed, such as locking of controls. Furthermore, no additional connections are required beyond that required by distribution system 801.

Each receiver 802-805 is configured to operate at a desired frequency for an RF signal received through antennas 820 and 821 via antenna splitters 822 and 823, respectively. Distribution system 801 provides diversity reception using antennas 820 and 821 (each antenna corresponding to a diversity branch) that typically provides for more robust reception than with a single antenna.

Each receiver 802-805 obtains an RF signal from antenna 820 via A-ports 806, 808, 810, and 812, respectively, and from antenna 821 via B-ports 807, 809, 811, and 813, respectively.

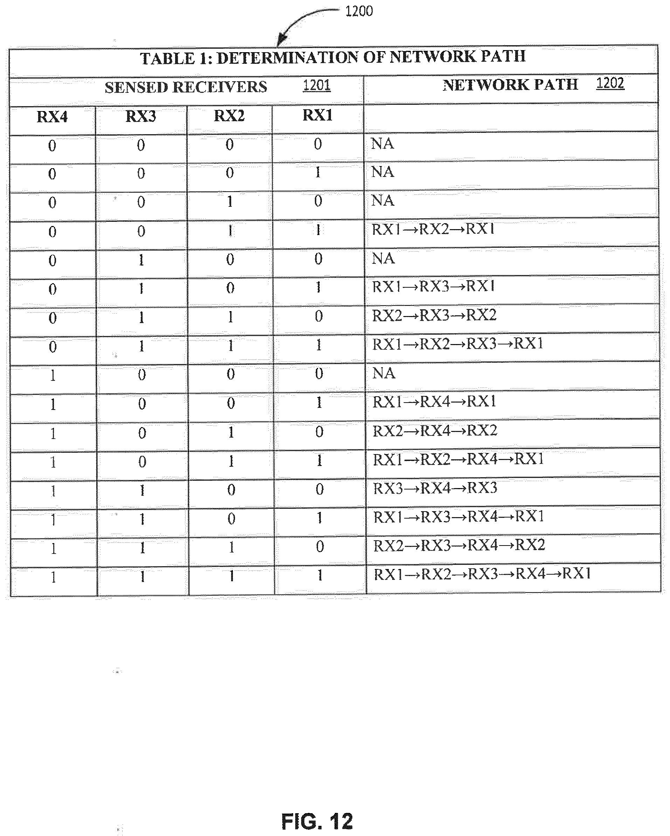

In addition to distribution of the RF signals, data may be transported among receivers 802-805 and distribution system 801 through A ports 806, 808, 810, and 812 and B-ports 807, 809, 811, and 813 via network array 814 as controlled by logic module 815. Data may be routed through network array 814 by detecting the configured receivers connected to distribution system 801 based on detection indications 851-854 from sensors 816-819, respectively. Logic module 815 may then process the detection indications 851-854 to obtain routing control signal 855 to control the routing of data among receivers 802-805. An example of the control of routing is shown in Figure 12, which maps sensed receivers 1201 to network paths 1202, as will be discussed in further detail.

Network array 814 and logic module 815 may include a processor such as a microcontroller unit (MCU) and/or discrete logic devices such as an array of multiplexers and transistors. Logic module 815 sends control signal 855 to network array 814.

Data is routed through coaxial antenna ports (corresponding to ports 806-813) based on the system configuration. Processing may be performed in distribution system 801 and processed data may then be sent to receivers 802-805. Also, processing may occur at one of the receivers 802-805 and then routed through distribution system 801 to all other receivers 802-805.

A data signal is included with an RF signal through ports 806-813 by data modulation in accordance with approaches previously discussed (e.g., modulating a DC component or a tone).

Data is routed from each A-port to the appropriate B-port, but the routing may be dynamically adjusted to compensate for connection configurations without user intervention if the receiver configuration changes.

While the system shown in Figure 8 shows four receivers 802-805 connected to distribution system 801, other systems may support a different number of receivers that is different from four. In addition, as will be discussed in further detail, the number of supported receivers may be expanded by connecting a plurality of distribution systems together.

Also, while the system shown in Figure 8 shows configured receivers 802-805 that are connected to distribution system 801, other systems may support other types of entities. For example, a communication system may combine RF signals from transmitters though RF ports and may use these RF ports for data connectivity among the connected transmitters.

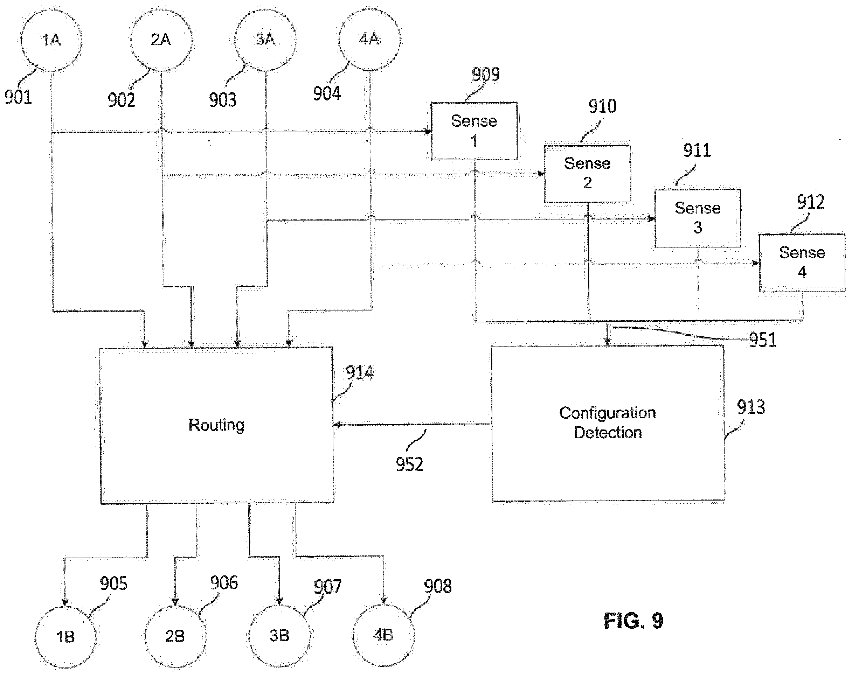

Figure 9 shows a block diagram for routing between ports based on sensing configured receivers. Data transmission between receivers 802-805 (as shown in Figure 8) may be sent from A-ports 901-904 to corresponding B-ports 905-908 through routing module 914 based on control signal 952 from configuration detection module 913.

Sense modules 909-912 may determine whether a receiver is connected to the corresponding A-port by determining whether there is a data signal superimposed on an RF signal. For example, when a receiver is in a data standby state, a logic high level is present on its A-port. This signal is detected by the sensing module 909-912, which provides indication signal 951 to configuration detection module 913 to generate control signal 952. Routing module 914 configures a path from A-ports 901-904 to corresponding B-ports 905-908 (as exemplified in Figure 12) in accordance with control signal 952.

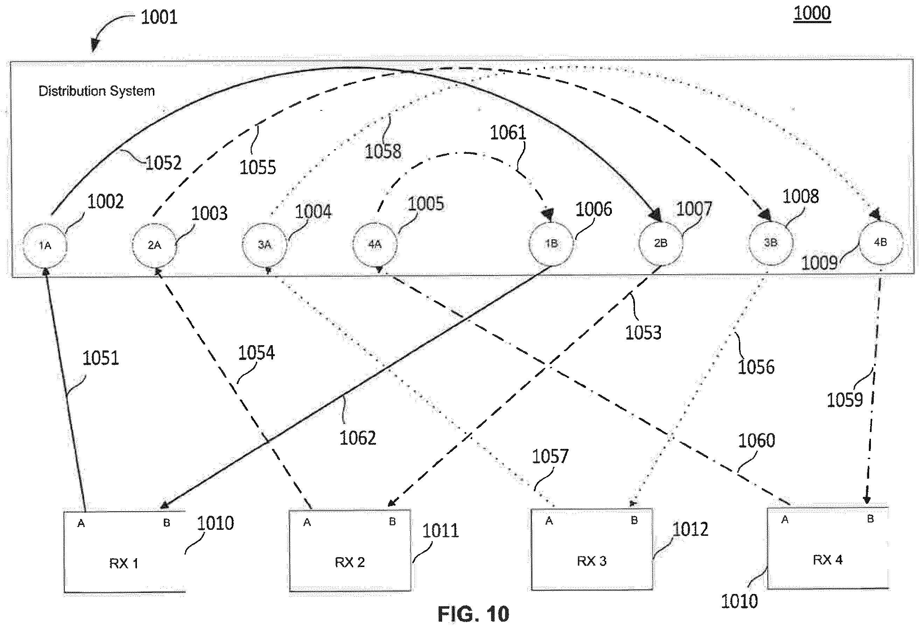

Figure 10 shows a routing configuration 1000 of a wireless communication system for use with a receiver according to an embodiment of the invention. Receivers 1010, 1011, 1012, and 1013 are connected to distribution system 1001 via A-ports 1002-1005 and B-ports 1006-1009 with RF cables 1051, 1053, 1054, 1056, 1057, 1059, 1060, and 1062 (typically BNC, SMA, and the like). Paths 1052, 1055, 1058, and 1061 may be established through a network (e.g., network array 814 as shown in Figure 8 or routing module 914 as shown in Figure 9) within distribution system 1001.

Data transmission from receiver 1010 with the other receivers 1011-1013 are established through:
1051→1052→1053→1054→1055→1056→1057→1058→1059→1060→1061→106 2. This path corresponds to RX1→RX2→RX3→RX4→RX1 as shown with the entry Figure 12, where the detected receiver indication equals "1111." With this example, receiver 1010 may function as a master device, in which command data (e.g., lock, unlock, and scan, as discussed with Figures 16-17) may originate and be passed to the other receivers 1011-1013. The master device may be designated such that network communication is initiated from only a single device rather than any device in the system. This approach may be desirable from a user interface perspective and may minimize cost or complexity in design. However, some configurations may have any receiver device in the system function as the master device.

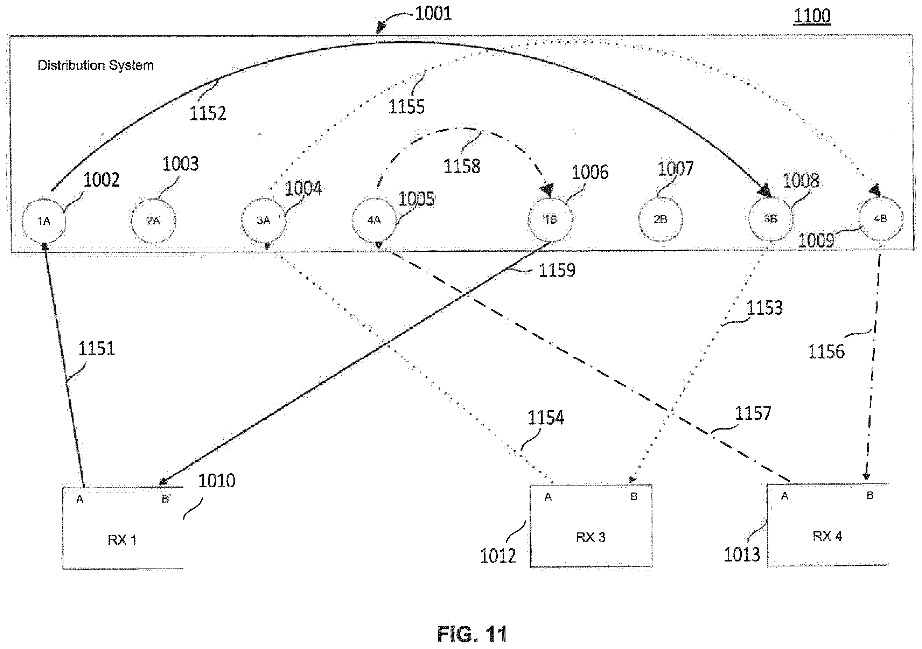

Figure 11 shows a re-routing of a routing configuration 1100 of a wireless communication system for use with a receiver according to an embodiment of the invention. Receivers 1010, 1012, and 1013 (i.e., receiver 1011 is not configured) are connected to distribution system 1001 via A-ports 1002, 1004, and 1005 and B-ports 1006, 1008, and 1009 with RF cables 1151, 1153, 1154, 1156, 1157, and 1159. Paths 1152, 1155, and 1158 may be established through a network (e.g., network array 814 as shown in Figure 8 or routing module 914 as shown in Figure 9) within distribution system 1001.

Data transmission from receiver 1010 with the other receivers 1012-1013 are established through path:
1151→1152→1153→1154→1155→1156→1157→1158→1159. This path corresponds to RX1→RX3→RX4→RX1 as shown with the entry Figure 12, where the detected receiver indication equals "1011." Figure 12 includes all possibilities for configuring receivers 1010-1013 with distribution system 1001.

According to an aspect of the disclosure, the receiver configuration may be static (where the receiver configuration does not change after initial setup) or may be dynamic (where the receiver configuration changes after the initial setup). With dynamic configuration, logic module 815 (as shown in Figure 8) continuously monitors sensors 816-819 and correspondingly modifies control signal 855.

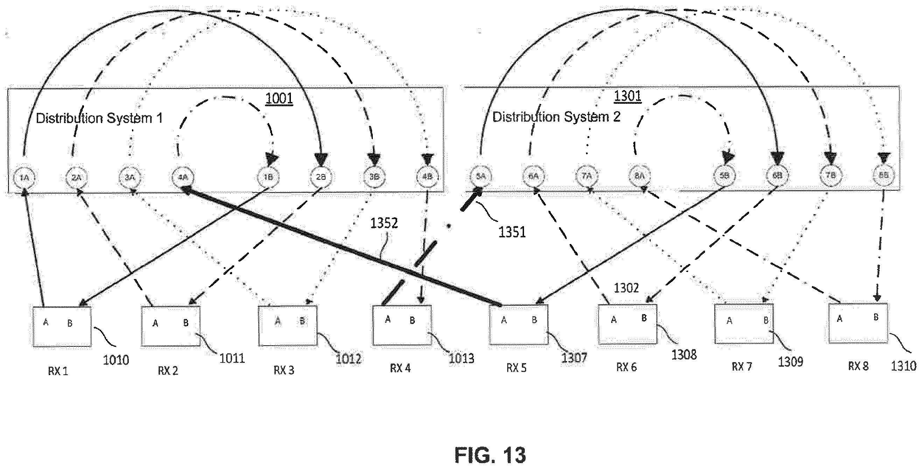

Figure 13 shows an example of extending a wireless communication system for use with a receiver according to an embodiment of the invention. For system expansion beyond the number of receivers compatible with a single distribution system, multiple distribution systems can be daisy-chained together. Daisy-chaining may be accomplished using an inherent design, in which case a set of cables is swapped between each system. Referring to Figure 13, additional receivers 1307-1310 are accommodated by adding distribution system 1301 and connecting RF cable 1351 from receiver 1013 to distribution system 1301 and RF cable 1352 from receiver 1307 to distribution system 1001.

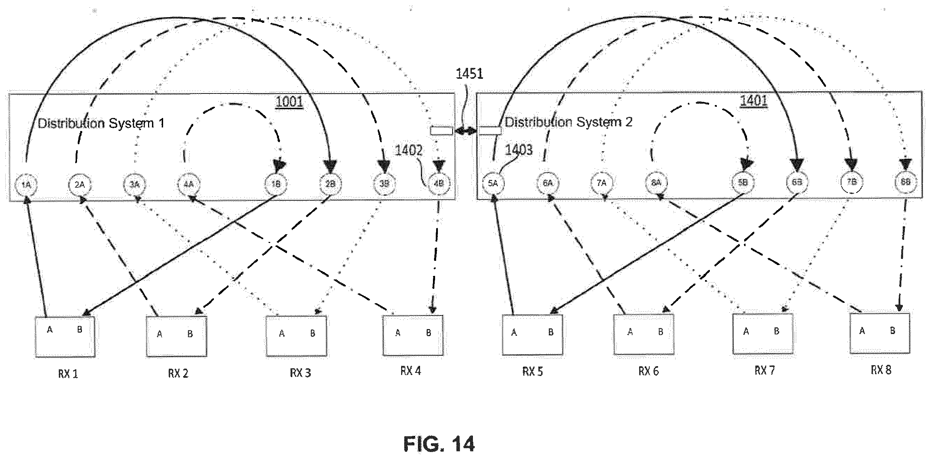

Figure 14 shows an example of extending a wireless communication system for use with a receiver according to an embodiment of the invention. A separate daisy-chain link 1451 connects distribution system 1401 to distribution system 1001. Link 1451 provides bi-directional data connectivity to extend the appropriate A-port of distribution system 1001 to the appropriate B-port of distribution system 1401 and the appropriate A-port of distribution system 1402 to the appropriate B-port of distribution system 1001. Routing to and from link 1451 is dynamically assigned based on the configuration of receivers, in a similar manner as was previously discussed.

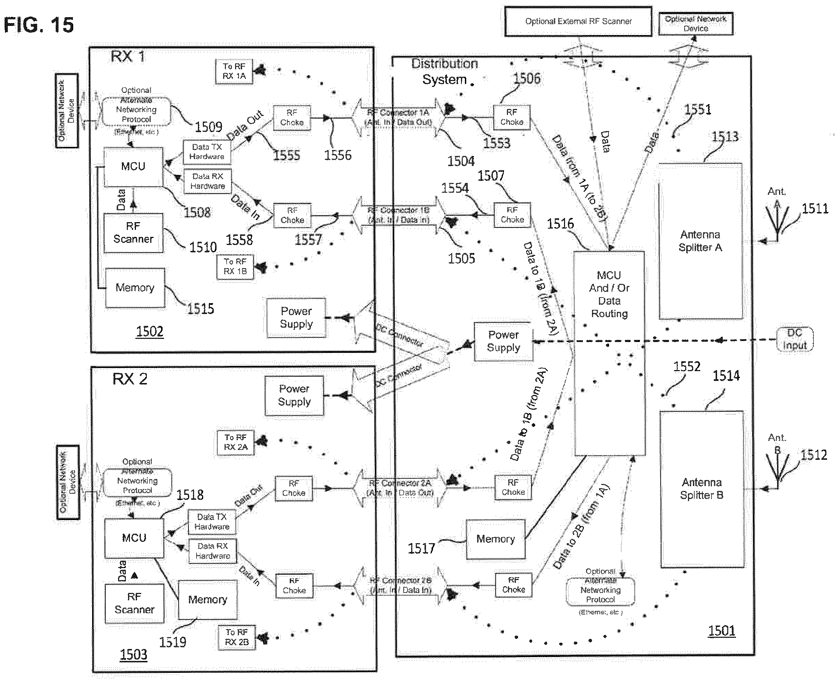

Figure 15 shows a wireless communication system for use with a receiver according to an embodiment of the invention. Receivers 1502 and 1503 are connected to distribution system 1501 through A-ports and B-ports in a similar manner as with Figure 8. For example, receiver 1502 is connected to distribution system 1501 through A-port 1504 and B-port 1505. RF connectivity from antenna 1511 (corresponding to the first diversity branch for receiver 1502) to A-port 1504 is supported through antenna splitter 1513 and path 1551. Similarly, RF connectivity from antenna 1512 (corresponding to the second diversity branch for receiver 1502) to B-port 1505 is supported through antenna splitter 1514 and path 1552.

At distribution system 1501, data connectivity from A-port 1504 to processor 1516 is supported through RF choke 1506 (which blocks RF connectivity) and path 1553, and data connectivity to B-port 1505 is supported through RF choke 1507 and path 1554. Data connectivity at receiver 1502 to the A-port is provided from processor 1508 through paths 1555 and 1556 and to the B-port to processor 1508 through paths 1557 and 1558.

A protocol module (e.g., module 1509) may support alternative networking protocols (Ethernet, WiFi, Zigbee, Bluetooth, and so forth) that may be added to receivers 1502 and 1503 and/or distribution system 1501. This additional functionality may override or work in conjunction with data connectivity provided through the A-ports and B-ports as discussed herein.

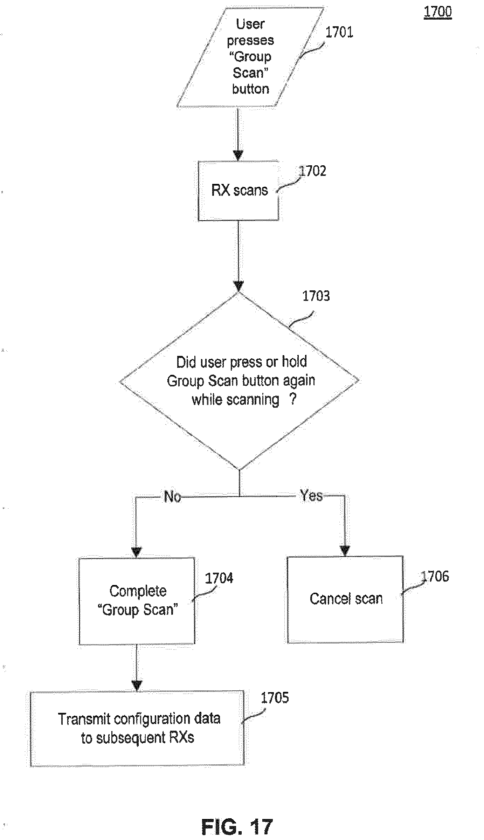

Receivers 1502 and 1503 also include a scanner (e.g., scanner 1510) in order to scan an RF spectrum for determining the set of frequencies that provide the best RF compatibility. The scanning capability may be used to support a scanning process that will be further discussed with Figure 17.

Processors 1508, 1516, and 1518 may execute computer executable instructions from a computer-readable medium, *e.g.,* memories 1515, 1517, and 1519, respectively, in order to perform any or all of the processes described herein). Receivers 1502 and 1503 and distribution system 1501 may include one or more application-specific integrated circuits (ASICs), complex programmable logic devices (CPLDs), field-programmable gate arrays (FPGAs), or other integrated circuits. Computer storage media may include volatile and nonvolatile, removable and non-removable media implemented in any method or technology for storage of information such as computer readable instructions, data structures, program modules or other data. Computer storage media include, but may not be limited to, random access memory (RAM), read only memory (ROM), electronically erasable programmable read only memory (EEPROM), flash memory or other memory technology, CD-ROM, digital versatile disks (DVD) or other optical disk storage, magnetic cassettes, magnetic tape, magnetic disk storage or other magnetic storage devices, or any other medium that can be used to store the desired information and that can be accessed by processors 1508, 1516, and 1518. The executable instructions may carry out any or all of the method steps described herein.

Receivers 1502 and 1503 and distribution system 1501 or portions thereof may be implemented as one or more application-specific integrated circuits (ASICs), complex programmable logic devices (CPLDs), field-programmable gate arrays (FPGAs), or other integrated circuits having instructions for performing operations as described in connection with one or more of any of the methods described herein. Said instructions may be software and/or firmware instructions stored in a machine-readable medium and/or may be hard-coded as a series of logic gates and/or state machine circuits in one or more integrated circuits and/or in one or more integrated circuits in combination with other circuit elements.

Figures 16-18 show processes in which one or more of the configured receivers can send data (that may be formatted as control/command messages) to the other receivers. One of the receivers is designated as the master receiver. In such a case, only the master receiver can originate a command message such as a lock/unlock message or can scan an RF spectrum in order to configure the channel settings of the receivers.

Routed data may be formatted into a command message that may include a command type, originating device identification, destination device identification, and command information. The originating device identification and/or destination device identification may not be included. In such a case, all receivers receiving the message should execute the command.

Figure 16 shows flow chart 1600 for locking/unlocking a receiver in a wireless communication system for use with a receiver according to an embodiment of the invention. Settings (e.g., frequency, gain level, and squelch threshold) at receivers
1502 and 1503 may be locked or unlocked in accordance with user input at one or more of the receivers. For example, a user may select locking or unlocking at one the configured receivers (e.g., receiver 802 as shown in Figure 8). The receiver may send a lock or unlock message to the other receivers through the A-ports and B-ports of the connected distributed system to inform the other receivers about the locking or unlocking of the settings. Accessories (e.g., remote antennas) and/or supplemental user interface elements (e.g., front panel display, software program on networked device) may be utilized and/or controlled.

Referring to flow chart 1600, a user locks or unlocks a receiver, e.g., receiver 802 as shown in Figure 8, at block 801 by providing a lock/unlock indicator. For example, the user may press a lock/unlock push button on a panel of the receiver that toggles between lock and unlock states. When the lock/unlock state changes at block 1602, the receiver generates a corresponding message that is sent to the other receivers at block 1603 through the A-ports and B-ports in a manner previously discussed. The other receivers can change their lock/unlock states in accordance with the message.

Figure 17 shows flow chart 1700 for a scanning process in a wireless communication system for use with a receiver according to an embodiment of the invention. At block 1701, a user initiates a group scan on any receiver in the system by, for example, pressing the scan push button on the receiver's panel. The receiver consequently scans the RF spectrum (e.g., with scanner 1510 as shown in Figure 15) at block 1702 to determine the most open group frequency, and then to sort the frequency channels based on best availability. The scan may be canceled at block 1706 if the user presses scan push button again at block 1703.

If the scan is not canceled, the initiating receiver completes the scan at block 1704 and passes resulting configuration data to the other receivers at block 1705 so that the receivers can set to the same group and sequentially deploy channel assignments based on descending RF availability. In this way, the system is optimally configured for the best channels for operation. Optimization may be based on RF spectrum availability, so that higher detected RF noise or interference on a given channel results in lower deployment-prioritization for that channel.

Receivers may be aware of multi-band or multi-product networks and may act accordingly. For example, group/channel deployment may be skipped for a non-matching band/product, but a lock/unlock command may be accommodated across multiple bands/products.

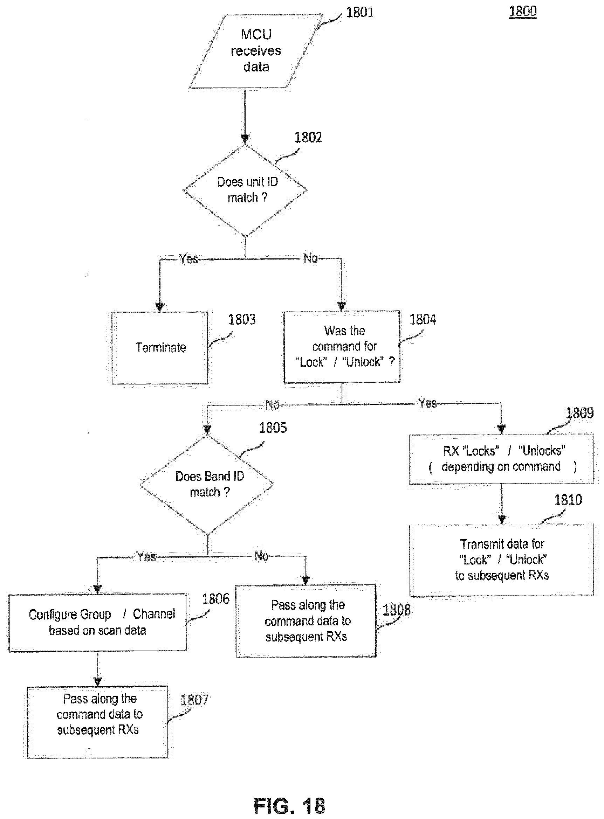

Figure 18 shows flow chart 1800 for sending data to receivers in a wireless communication system for use with a receiver according to an embodiment of the invention. At block 1801, a receiver receives data and determines whether the data contains identification matching the receiver's identification at block 1802. If so, the data is processed so that passing of data to other receivers is terminated at block 1803.

However, if the identification does not match and the command is to lock/unlock at block 1804, the receiver executes the command and passes the command to the other receivers at blocks 1809 and 1810. Otherwise, if the scan configuration information matches the receiver's band identification at block 1805, the receiver configures its frequency setting according to the scan data at block 1806 and passes the data to the other receivers at block 1807. If the receiver's band identification does not match, the command data is passed to subsequent receivers at block 1808.

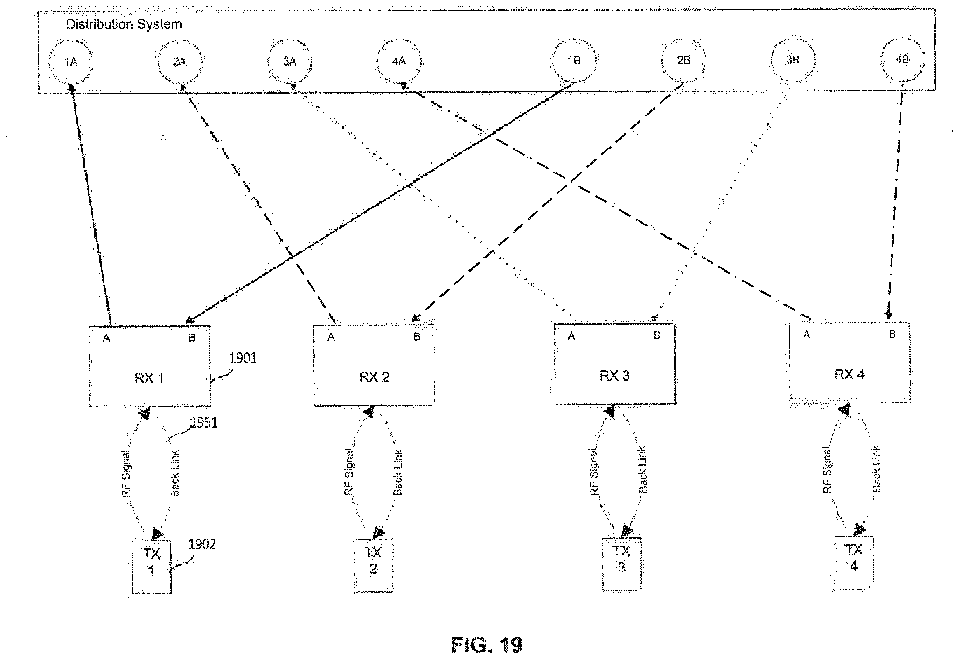

Figure 19 shows an example for scanning an RF spectrum with back link 1951 from receiver 1901 to portable device 1902 in a wireless communication system for use with a receiver according to an embodiment of the invention. Back link 1951 may comprise a reverse wireless channel that does not adversely affect other functionality. With back link 1951, the wireless system can scan the RF spectrum and deploy group/channel configuration not only to all receivers, but also to all transmitters, e.g. transmitter 1902. Additionally, deployment may also occur dynamically and automatically during operation.

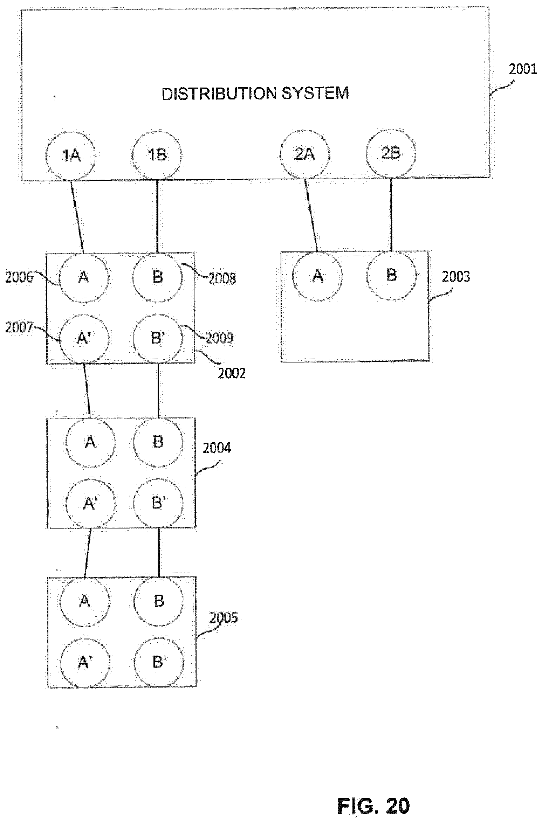

Figure 20 shows a block diagram of a wireless communication system in which some of the receivers are cascaded in accordance with an aspect of the embodiments. Receivers 2002 and 2003 interact with distribution system 2001 in a similar manner that was previously discussed. However, additional receivers 2004-2005 are cascaded with receiver 2002. Cascading is performed by modifying signals at A-port 2006 and B-port 2008 and passing the modified signals at modified A-port 2007 and modified B-port 2009, respectively.

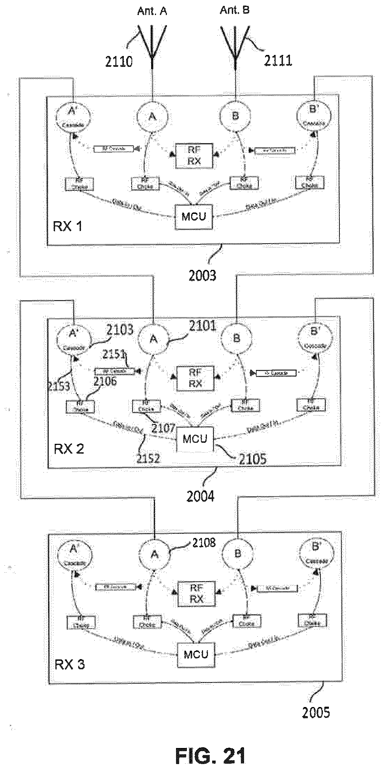

Figure 21 shows an example of routing data with receivers 2003-2005 through a cascaded configuration in accordance with an aspect of the embodiments. Receiver 2004 receives the RF signal from antenna 2110 and data from other receivers through A-port 2101. Signal 2151 is cascaded to modified A-port 2103 and combined with data generated by processor 2105 through paths 2152 and 2153 at modified A-port 2103, where RF chokes 2106 and 2107 provide isolation from the RF signal. The cascaded signal is consequently available at A-port 2108 for receiver 2005 to process. Consequently, the A-ports and modified A-ports provide RF connectivity from antenna 2110 while also providing bi-directional data connectivity between receivers 2003, 2004, and 2005. In a similar manner, the B-ports and modified B-ports provide connectivity from antenna 2111 while also providing bi-directional data connectivity between receivers 2005, 2004, and 2003.

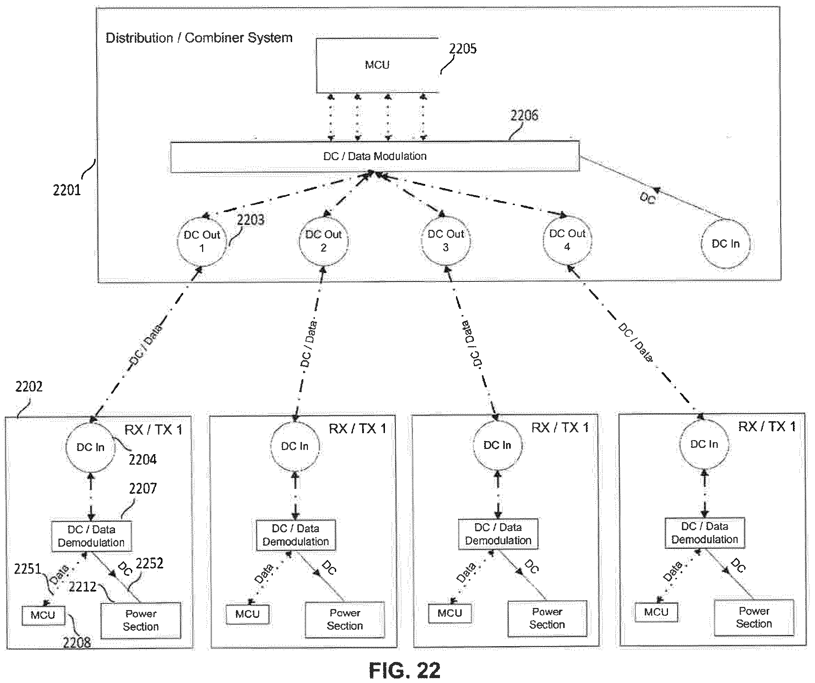

Figure 22 shows an example of modulating the DC level on output power connectors 2203 and 2204 for networking functionality between distribution system 2201 and RF entity 2202 (e.g., a receiver or transmitter) in accordance with an aspect of the embodiments. Modulation of DC level on the output power connectors may be used for networking functionality in a similar way as with the RF ports through A-ports and B-ports as previously discussed.

Processor 2205 sends data to modulator 2206 that modulates the DC electrical power signal in accordance with the data. For example, a nominal 13.5 volt signal may be increased to 15 volts when data bit equals "1" and reduced to 12 volts when data bit equals "0." The corresponding signal at power port 2204 is demodulated by demodulator 2207, and the received data is sent to processor 2208 over path 2201. The DC signal is presented to power section 2252 to provide electrical power to RF entity 2202. Data in the reverse direction (i.e., from receiver 2202 to distribution system 2201) may be provided in a similar manner.

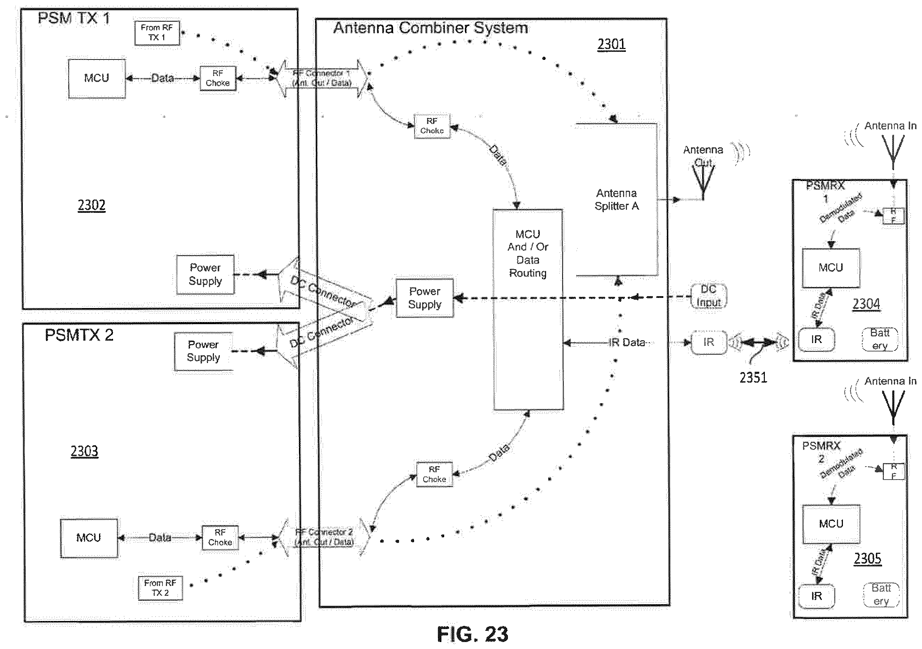

Figure 23 shows an example of networking a system of transmitters 2302-2303 through an antenna combiner 2301 for use with a receiver according to an embodiment of the invention. Rather than networking a system of receivers through a distribution system as shown in Figure 8, antenna combiner 2301 supports wireless personal stage monitor (PSM) systems, in which transmitters 2302-2303 transmit RF signals to portable receivers 2304-2305.

Receiver 2304 may scan an RF spectrum and send scan results over infrared (IR) channel 2351 to antenna combiner 2301 so that transmitters 2302-2303 can be configured accordingly using RF ports in a similar manner as previously discussed. However, in a system such as this, data is not routed in a looped manner as shown in Figure 10. Instead, data is sent and received directly to and from connected devices. Routing can be such that only individually targeted connected transmitters receive data or such that all connected transmitters simultaneously receive data and process the data according to the connected port assignment. Once the connected transmitters 2302-2303 have been configured, the inherent RF communication path to portable receivers 2304-2305 can be used for deployment. With some embodiments, each of transmitters 2302-2303 are paired with a portable receiver 2304-2305 by associating a unique ID from the transmitter to its paired receiver. Data modulation techniques, for example, like Amplitude Shift Keying (ASK) can be applied to an auxiliary signal like pilot tone or tone key that is radiated in transmitters 2302-2303. Portable receivers 2304-2305 would receive and demodulate the RF signal and can then also demodulate the auxiliary data. This data can contain deployment settings like frequency and lock commands, as well as identification to enable pairing of a transmitter and a receiver. Using this approach, an entire collection of multiple wireless personal stage monitor (PSM) systems may be optimally setup very quickly and easily.

Data communications among different RF entities in an RF apparatus is supported through RF connections via RF ports. RF entities may include RF receivers, in-line RF signal amplifiers, integral antenna amplifiers, RF distribution amplifiers, and/or antenna array controllers. For example, data communications may convey data about the gain of an in-line RF signal amplifier, the gain of an integral antenna amplifier, filtering, gain, and configuration parameters of an RF distribution amplifier, and/or the coverage pattern of a directional antenna array.

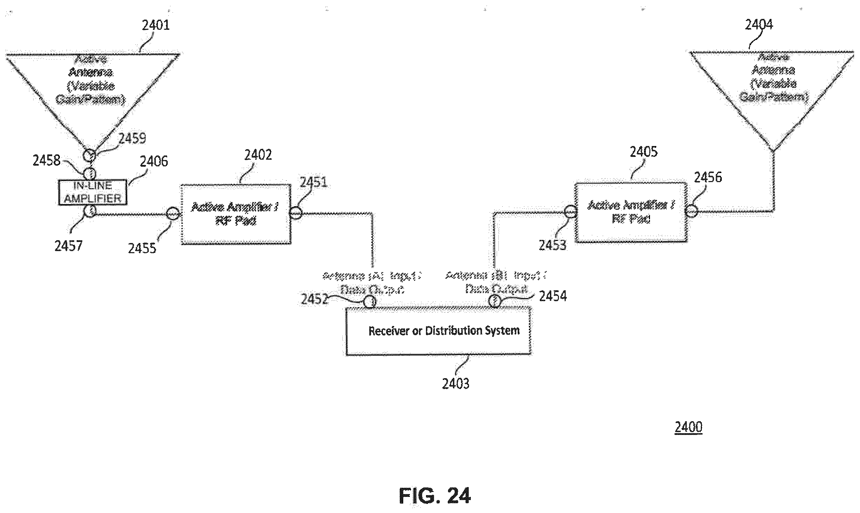

Figure 24 shows RF communication system 2400 in which receiver or distribution system 2403 obtains RF signals from antennas 2401 and 2404 through active amplifiers 2402 and 2405, respectively. The RF antenna input/data output port 2452 of receiver or distribution system 2403 may be used to remotely control the behavior and performance of other RF devices (entities) that are connected along an RF chain. Receiver or distribution system 2403 may send data (e.g., a message) to active amplifier 2402 via port 2451 in order to control the amount of signal gain to be applied to a received signal. The message may also contain data for active amplifier 2402 to insert a specific amount of attenuation. Active amplifier 2402 may also send data (message) back to receiver or distribution system 2403 to provide information about current conditions and/or settings. Some or all of the data sent to active amplifier 2402 from receiver or distribution system 2403 may be further passed to another RF entity, e.g., in-line amplifier 2406 and/or active antenna 2401 via ports 2455, 2457, 2458, and 2459 so that the other devices can establish a communication link to receiver or distribution system 2403. For example, in-line amplifier 2406 may be inserted in a long cable run and may be controlled to vary gain from low gain to high gain in order to overcome additional cable loss that has been added to RF communication system 2400 without the need to be physically near antenna 2401.

Data passed from receiver or distribution system 2403 over an RF connection may be used to remotely control gain or attenuation settings and/or directionality of the coverage pattern of active antenna 2401. In addition, active antenna 2401 may send status data back to receiver or distribution system 2403 with parameters of its current operation, configuration, or other information pertinent to system performance.

The amount of data sent to active antenna 2401 may be reduced by including only the information required for processing by circuitry contained within active antenna 2401 itself. For example, active antenna 2401 may support variable gain settings that are remotely controlled by receiver or distribution system 2403 to reduce gain in order to achieve higher system compatibility in a harsh RF environment. This approach may enable more channels to be accommodated within a given RF spectrum without requiring redeployment of the entire number of transmitters. Also, active antenna 2401 may adjust the coverage pattern (beam shape) in response to data from receiver or distribution system 2403 in order to avoid interference or improve RF reception of the desired signal.

The receiver or distribution system 2403 may be connected to an additional antenna, e.g., antenna 2404 through ports 2453, 2454, and 2456, to provide more robust reception. Corresponding data may be sent among RF entities 2403-2405 in a similar fashion as described above.

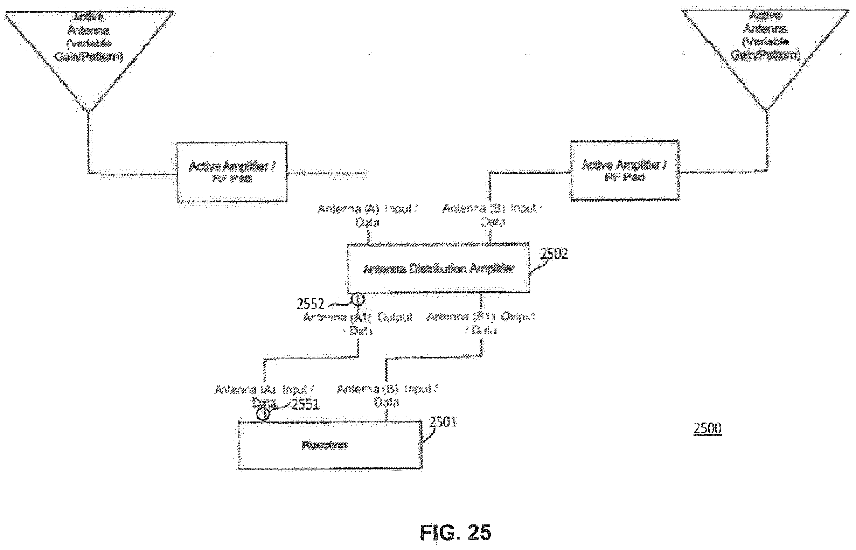

Referring to Figure 25, data messages passed through the RF connections may also be used to remotely control the antenna distribution amplifier parameters of distribution amplifier 2502 from another RF entity, e.g., receiver 2501 through ports 2551 and 2552. For example, parameters may specify the switchable bands contained within communication system 2500. The data may also contain information regarding input/output power or control thereof. Messages may also be sent from distribution amplifier 2502 to receiver 2501 concerning overload levels. Communication from receiver 2501 to distribution amplifier 2502 (or vice versa) may allow for an intelligent and adaptive system that is controlled by a number of RF entities that are connected together. This approach may allow for system 2500 to use a wide range of simple to complex communication messages over a data network created with no additional cabling. The messages may also be sent from distribution amplifier 2502 to RF entities that are connected along an RF chain in a similar fashion as explained above. For example, distribution amplifier 2502 may control an in-line amplifier, active antenna or other in-line device.

While some systems may incorporate an active antenna and/or amplifier as shown in Figures 24 and 25, some systems may incorporate other types of RF entities.

## Claims

1. A receiver (802-805; 1502, 1503; 2002-2005) for receiving a radio frequency (RF) signal in a distribution system (801; 1501; 2001), the receiver comprising:
an A-port (806, 808, 810, 812; 1504; 2006; 2101) providing radio frequency (RF) connectivity to a first antenna (820; 1511; 2110) via the distribution system;
a B-port (807, 809, 811, 813; 1505; 2008) providing RF connectivity to a second antenna (821; 1512; 2111) via the distribution system; and
a processor (1508, 1518; 2105; 2208) configured to perform:
receiving received data from the distribution system via the B-port;
processing the received data to obtain processed data; and
sending the processed data to the distribution system via the A-port,
**characterised in that**:
the receiver further comprises an RF scanner (1510), and **in that** the processor is further configured to perform:
obtaining an indication to perform a scan by the RF scanner;
initiating (1701), based on the indication, the scan by the RF scanner;
obtaining scan results from the RF scanner;
including the scan results in the processed data; and
passing (1705) the processed data to a next receiver via the distribution system through the A-port.

2. The receiver of claim 1, further comprising:
a first RF choke (2106) positioned in a first data path (1555, 1556) between the A-port and the processor; and
a second RF choke (2107) positioned in a second data path (1557, 1558) between the B-port and the processor.

3. The receiver of claim 1, the data comprising a receiver lock message from another receiver connected to the distribution system, wherein the processor is further configured to perform:
obtaining an indication to lock at least one configuration parameter of the receiver;
locking at least one configuration parameter; and
passing the receiver lock message to a next receiver via the distribution system through the A-port.

4. The receiver of claim 1, the data comprising a receiver unlock message from another receiver connected to the distribution system, wherein the processor is further configured to perform:
obtaining an indication to unlock at least one configuration parameter of the receiver;
unlocking the at least one configuration parameter; and
passing the receiver unlock message to a next receiver via the distribution system through the A-port.

5. The receiver of claim 1, wherein the data includes a contained identification and wherein the processor is further configured to perform:
when the contained identification matches the identification of the receiver, performing an action specified by the data and terminating passing the data;
when the contained identification does not match the receiver identification and the received data comprises one of a lock and unlock command, performing the action and passing the received data to a next receiver;
when the contained identification does not match the receiver identification and the received data includes a contained band identification that matches a receiver band identification, configuring the receiver in accordance with scan data contained in the received data, and passing the received data to the next receiver; and
when the contained identification does not match the receiver identification and the received data includes the contained band identification that does not match the receiver band identification, passing the received data to the next receiver.

6. The receiver of claim 5, the receiver further comprising:
a communications interface configured to support a communications channel between the receiver and a portable device (1902), wherein the processor is configured to send data to the portable device via the communication interface.

7. The receiver of claim 1, the receiver further comprising:
a modified A-port (2007; 2103); and
a data pathway (2152, 2153) configured to transport the processed data from the processor to the modified A-port;
wherein the modified A-port is configured to provide RF connectivity from the first antenna to another receiver (2003, 2004, 2005), to combine the processed data with an RF signal to obtain a combined signal, and to pass the combined signal to the another receiver.

## Patentansprüche

1. Empfänger (802-805; 1502, 1503; 2002-2005) zum Empfangen eines Hochfrequenz- (RF-) Signals in einem Verbreitungssystem (801; 1501; 2001), wobei der Empfänger umfasst:
einen A-Anschluss (806, 808, 810, 812; 1504; 2006; 2101), der Hochfrequenz- (RF-) Konnektivität an einer ersten Antenne (820; 1511; 2110) über das Verbreitungssystem bereitstellt;
einen B-Anschluss (807, 809, 811, 813; 1505; 2008), der RF-Konnektivität an einer zweiten Antenne (821; 1512; 2111) über das Verbreitungssystem bereitstellt; und
einen Prozessor (1508, 1518; 2105; 2208), der ausgelegt ist, um Folgendes durchzuführen:
Empfangen von empfangenen Daten von dem Verbreitungssystem über den B-Anschluss;
Verarbeiten der empfangenen Daten, um verarbeitete Daten zu erhalten; und
Senden der verarbeiteten Daten an das Verbreitungssystem über den A-Anschluss,
**dadurch gekennzeichnet, dass**:
der Empfänger weiter einen RF-Scanner (1510) umfasst, und dadurch, dass der Prozessor weiter ausgelegt ist, um Folgendes durchzuführen:
Erhalten einer Anzeige, einen Scan durch den RF-Scanner durchzuführen;
Initiieren (1701) des Scans durch den RF-Scanner auf Basis der Anzeige;
Erhalten von Scan-Ergebnissen von dem RF-Scanner;
Einbinden der Scan-Ergebnisse in die verarbeiteten Daten; und
Leiten (1705) der verarbeiteten Daten über das Verbreitungssystem durch den A-Anschluss an einen nächsten Empfänger.

2. Empfänger nach Anspruch 1, weiter umfassend:
eine erste RF-Drossel (2106), die in einem ersten Datenpfad (1555, 1556) zwischen dem A-Anschluss und dem Prozessor positioniert ist; und
eine zweite RF-Drossel (2107), die in einem zweiten Datenpfad (1557, 1558) zwischen dem B-Anschluss und dem Prozessor positioniert ist.

3. Empfänger nach Anspruch 1, wobei die Daten eine Empfängersperrnachricht von einem anderen Empfänger umfassen, der mit dem Verbreitungssystem verbunden ist, wobei der Prozessor weiter ausgelegt ist, um Folgendes durchzuführen:
Erhalten einer Anzeige, mindestens einen Konfigurationsparameter des Empfängers zu sperren;
Sperren mindestens eines Konfigurationsparameters; und
Leiten der Empfängersperrnachricht über das Verbreitungssystem durch den A-Anschluss an einen nächsten Empfänger.

4. Empfänger nach Anspruch 1, wobei die Daten eine Empfängerentsperrnachricht von einem anderen Empfänger umfassen, der mit dem Verbreitungssystem verbunden ist, wobei der Prozessor weiter ausgelegt ist, um Folgendes durchzuführen:
Erhalten einer Anzeige, mindestens einen Konfigurationsparameter des Empfängers zu entsperren;
Entsperren des mindestens einen Konfigurationsparameters; und
Leiten der Empfängerentsperrnachricht über das Verbreitungssystem durch den A-Anschluss an einen nächsten Empfänger.

5. Empfänger nach Anspruch 1, wobei die Daten eine enthaltene Identifikation beinhalten und wobei der Prozessor weiter ausgelegt ist, um Folgendes durchzuführen:
wenn die enthaltene Identifikation mit der Identifikation des Empfängers übereinstimmt, Durchführen einer durch die Daten spezifizierten Aktion und Beenden des Leitens der Daten;
wenn die enthaltene Identifikation nicht mit der Empfängeridentifikation übereinstimmt und die empfangenen Daten einen von einem Sperr- und einem Entsperrbefehl umfassen, Durchführen der Aktion und Leiten der empfangenen Daten an einen nächsten Empfänger;
wenn die enthaltene Identifikation nicht mit der Empfängeridentifikation übereinstimmt und die empfangenen Daten eine enthaltene Bandidentifikation beinhalten, die mit einer Empfängerbandidentifikation übereinstimmt, Konfigurieren des Empfängers in Übereinstimmung mit in den empfangenen Daten enthaltenen Scan-Daten und Leiten der empfangenen Daten an den nächsten Empfänger; und
wenn die enthaltene Identifikation nicht mit der Empfängeridentifikation übereinstimmt und die empfangenen Daten die enthaltene Bandidentifikation beinhalten, die nicht mit der Empfängerbandidentifikation übereinstimmt, Leiten der empfangenen Daten an den nächsten Empfänger.

6. Empfänger nach Anspruch 5, wobei der Empfänger weiter umfasst:
eine Kommunikationsschnittstelle, die ausgelegt ist, um einen Kommunikationskanal zwischen dem Empfänger und einer tragbaren Vorrichtung (1902) zu unterstützen, wobei der Prozessor ausgelegt ist, um Daten über die Kommunikationsschnittstelle an die tragbare Vorrichtung zu senden.

7. Empfänger nach Anspruch 1, wobei der Empfänger weiter umfasst:
einen modifizierten A-Anschluss (2007; 2103); und
einen Datenpfad (2152, 2153), der ausgelegt ist, um die verarbeiteten Daten von dem Prozessor zu dem modifizierten A-Anschluss zu transportieren;
wobei der modifizierte A-Anschluss ausgelegt ist, um RF-Konnektivität von der ersten Antenne zu einem anderen Empfänger (2003, 2004, 2005) bereitzustellen, die verarbeiteten Daten mit einem RF-Signal zu kombinieren, um ein kombiniertes Signal zu erhalten, und das kombinierte Signal an den anderen Empfänger zu leiten.

## Revendications

1. Récepteur (802-805 ; 1502, 1503 ; 2002-2005) permettant de recevoir un signal de radiofréquence (RF) dans un système de distribution (801 ; 1501 ; 2001), le récepteur comprenant :
un port A (806, 808, 810, 812 ; 1504 ; 2006 ; 2101) fournissant une connectivité de radiofréquence (RF) à une première antenne (820 ; 1511; 2110) via le système de distribution ;
un port B (807, 809, 811, 813 ; 1505 ; 2008) fournissant une connectivité RF à une seconde antenne (821 ; 1512 ; 2111) via le système de distribution ; et
un processeur (1508, 1518 ; 2105 ; 2208) configuré pour effectuer :
la réception de données reçues provenant du système de distribution via le port B ;
le traitement des données reçues pour obtenir des données traitées ; et
l'envoi des données traitées au système de distribution via le port A,
**caractérisé en ce que** :
le récepteur comprend en outre un scanner RF (1510), et **en ce que** le processeur est en outre configuré pour effectuer :
l'obtention d'une indication pour effectuer un balayage par le scanner RF ;
le lancement (1701), sur la base de l'indication, du balayage par le scanner RF;
l'obtention de résultats de balayage provenant du scanner RF ;
l'inclusion des résultats de balayage dans les données traitées ; et
le passage (1705) des données traitées à un récepteur suivant via le système de distribution au travers du port A.

2. Récepteur selon la revendication 1, comprenant en outre :
une première bobine d'arrêt RF (2106) positionnée sur un premier chemin de données (1555, 1556) entre le port A et le processeur ; et
une seconde bobine d'arrêt RF (2107) positionnée sur un second chemin de données (1557, 1558) entre le port B et le processeur.

3. Récepteur selon la revendication 1, les données comprenant un message de verrouillage de récepteur provenant d'un autre récepteur connecté au système de distribution, dans lequel le processeur est en outre configuré pour effectuer :
l'obtention d'une indication pour verrouiller au moins un paramètre de configuration du récepteur ;
le verrouillage d'au moins un paramètre de configuration ; et
le passage du message de verrouillage de récepteur à un récepteur suivant via le système de distribution au travers du port A.

4. Récepteur selon la revendication 1, les données comprenant un message de déverrouillage de récepteur provenant d'un autre récepteur connecté au système de distribution, dans lequel le processeur est en outre configuré pour effectuer :
l'obtention d'une indication pour déverrouiller au moins un paramètre de configuration du récepteur ;
le déverrouillage du au moins un paramètre de configuration ; et
le passage du message de déverrouillage de récepteur à un récepteur suivant via le système de distribution au travers du port A.

5. Récepteur selon la revendication 1, dans lequel les données incluent une identification contenue et dans lequel le processeur est en outre configuré pour effectuer :
lorsque l'identification contenue correspond à l'identification du récepteur, le fait d'effectuer une action spécifiée par les données et le fait de mettre fin au passage des données ;
lorsque l'identification contenue ne correspond pas à l'identification de récepteur et que les données reçues comprennent une d'une commande de verrouillage et de déverrouillage, le fait d'effectuer l'action et le passage des données reçues à un récepteur suivant ;
lorsque l'identification contenue ne correspond pas à l'identification de récepteur et que les données reçues incluent une identification de bande contenue qui correspond à une identification de bande de récepteur, la configuration du récepteur conformément à des données de balayage contenues dans les données reçues, et le passage des données reçues au récepteur suivant ; et
lorsque l'identification contenue ne correspond pas à l'identification de récepteur et que les données reçues incluent l'identification de bande contenue qui ne correspond pas à l'identification de bande de récepteur, le passage des données reçues au récepteur suivant.

6. Récepteur selon la revendication 5, le récepteur comprenant en outre :
une interface de communications configurée pour prendre en charge un canal de communications entre le récepteur et un dispositif portatif (1902),
dans lequel le processeur est configuré pour envoyer des données au dispositif portatif via l'interface de communication.

7. Récepteur selon la revendication 1, le récepteur comprenant en outre :
un port A modifié (2007 ; 2103) ; et
un trajet de données (2152, 2153) configuré pour transporter les données traitées du processeur au port A modifié ;
dans lequel le port A modifié est configuré pour fournir une connectivité RF à partir de la première antenne à un autre récepteur (2003, 2004, 2005), pour combiner les données traitées avec un signal RF pour obtenir un signal combiné, et pour passer le signal combiné à l'autre récepteur.
